# EUROPÄISCHE PATENTSCHRIFT

(11) **EP 0 962 374 B1**
(45) Veröffentlichungstag und Bekanntmachung des Hinweises auf die Patenterteilung: **15.01.2003**
(21) Anmeldenummer: 99105818.1
(22) Anmeldetag: 23.03.1999
(51) Int. Cl.: B61D 27/00, B60H 1/00

(54) **Einbaufertiges Klimatisierungsmodul, insbesondere für Schienenfahrzeuge**
Ready to fit air conditioning module, especially for railway vehicles
Module de traitement d'air prêt au montage, notamment pour véhicules ferroviaires

(30) Priorität: 30.05.1998 DE 19824461
(43) Veröffentlichungstag der Anmeldung: 08.12.1999
(73) Patentinhaber: Behr Industrietechnik GmbH & Co., 70469 Stuttgart (DE)
(72) Erfinder: Schwärzler, Hans-Christian, 70467 Stuttgart (DE)
(74) Vertreter: Dreiss, Fuhlendorf, Steimle & Becker

(56) Entgegenhaltungen:
- EP-A- 0 563 807
- GB-A- 2 033 073
- US-A- 2 148 596
- US-A- 3 862 549

## Beschreibung

Die Erfindung betrifft ein einbaufertiges Klimatisierungsmodul, insbesondere für Schienenfahrzeuge und vorzugsweise für Reisezugwagen, mit einem hermetisch geschlossenen, elektrisch betreibbaren Kältemittelkreislauf. Ein solches Klimatisierungsmodul ist z.B. aus der US-2,148,596 bekannt.

Aufgabe der Erfindung ist es, ein solches Klimatisierungsmodul bereitzustellen, das sich leicht montieren und demontieren lässt und dabei speziell durchzuführende Anschlussarbeiten zur gegenseitigen Verbindung von modul- und fahrzeugseitigen Luftwegen erübrigt.

Diese Aufgabe wird erfindungsgemäß durch ein Klimatisierungsmodul gemäß Anspruch 1 gelöst.

Durch die erfindungsgemäße schräge und parallele gegenseitige Zuordnung von jeweils eine Wandöffnung aufweisenden, ebenen Seitenwandteilen des Gehäuses und der zu diesen benachbarten, jeweils von einer Verbindungsöffnung durchsetzten Kanalwandteile von fahrzeugfest montierten Luftführungskanälen ist für das Klimatisierungsmodul ein Justierbett geschaffen, durch das bei dessen Montage zugleich eine verschraubungsfreie, zuverlässig dichte Verbindung der modul- und fahrzeugseitigen Luftwege zustande kommt.

Diese dichte Verbindung lässt sich in besonders günstiger Weise gemäß Anspruch 2 erzielen.

Für die erforderliche Gehäusejustierung ist eine Ausbildung des Gehäuses gemäß Anspruch 3 vorteilhaft geeignet. Das Klimatisierungsmodul kann dabei derart kompakt ausgelegt sein, dass für jede zu klimatisierende Raumzone, bspw. für jedes Abteil eines Reisezugwagens, ein solches Modul vorgesehen werden kann, wobei dessen Einbau unterhalb oder oberhalb der Raumzone möglich ist.

Das Klimatisierungsmodul kann so ausgelegt sein, dass es lediglich für den Sommerbetrieb bzw. zur Raumzonenkühlung einsetzbar ist.
Dasselbe lässt sich jedoch, ohne zusätzliche Ausstattung mit einer speziellen Heizvorrichtung zum Gegenheizen in technisch einfacher Weise auch für den Winterbetrieb einsetzen, sofern dasselbe gemäß Anspruch 4 weitergebildet wird.

In diesem Falle erfüllen die zur Verflüssigung des Kältemittels dienenden Komponenten des Kältemittelkreislaufs für den Winterbetrieb die Heizfunktion durch eine Wärmepumpenschaltung, wodurch mit hohen primär Energieausnutzungsgraden Warmluft energieeffizient zur Verfügung gestellt wird.

Diese konstruktive Ausgestaltung ermöglicht schliesslich in einfacher Weise einen Lüftungsbetrieb bei stillgelegtem Kältemittelkreislauf, sofern Verbindungen der beiden Gehäusekammern in der in Anspruch 5 vorgeschlagenen Weise gehandhabt werden.

In der Zeichnung ist ein Ausführungsbeispiel der Erfindung, stark schematisiert und vereinfacht, dargestellt. Es zeigen:
- Figur 1: eine Draufsicht auf das Klimatisierungsmodul, wobei dessen Gehäuse von dessen Träger abgenommen ist;
- Figur 2: eine Ansicht des Klimatisierungsmoduls in Richtung des Pfeiles A der Figur 1 gesehen;
- Figur 3: eine Ansicht des Klimatisierungsmoduls in Richtung des Pfeiles B der Figur 2 gesehen;
- Figuren 4 bis 6: jeweils eine Ansicht des Gehäuses entsprechend den Figuren 1 bis 3;
- Figur 7: eine Draufsicht auf eine Modulanordnung zur Klimatisierung von mehreren, hintereinander liegenden Wagenabteilen;
- Figur 8: eine Seitenansicht auf einen Teil der Modulanordnung gemäß Figur 7, in vergrößertem Maßstab;
- Figur 9: in Draufsicht die Verbindung der beiden Modul-Gehäusekammern für den Sommerbetrieb des Klimatisierungsmoduls;
- Figuren 10 und 11: Darstellungen ähnlich Figur 9, zur Veranschaulichung der Verbindung der beiden Modulgehäusekammern mit der zu klimatisierenden Raumzone für den Winterbetrieb bzw. Lüftungsbetrieb des Klimatisierungsmoduls.

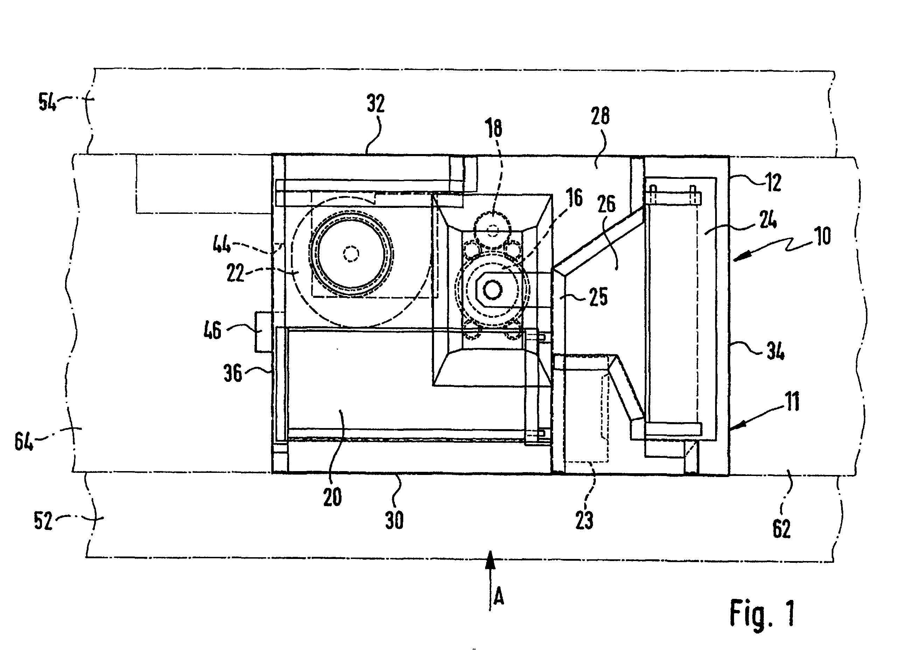

Das in den Figuren 1 bis 3 gezeigte Klimatisierungsmodul ist als Ganzes mit 10 bezeichnet und weist ein zweiteiliges Gehäuse 11 auf, dessen Gehäuseunterteil bspw. als Trägerrahmen 12 und dessen Gehäuseoberteil 14 eine vorzugsweise aus Kunststoff hergestellte Abdeckhaube bildet.

Im Gehäuse 11 sind die Komponenten eines Kältemittelkreislaufs installiert, von denen einfachhheitshalber lediglich die Funktionswesentlichsten dargestellt sind. Hierbei bezeichnet 16 einen elektrisch betriebenen Verdichter, vorzugsweise einen Rollkolbenverdichter mit schwingungsgedämpfter Aufhängung bei 17, 18 einen Ölabscheider, 20 einen Verflüssiger, 22 und 23 Gebläse und 24 einen Verdampfer.

Der Gehäuseinnenraum ist durch eine Trennwand 25 in zwei separate Gehäusekammern 26 und 28 unterteilt (Figur 1), wobei Verdampfer 24 nebst Gebläse 23 in der Gehäusekammer 26 untergebracht sind. Die Kältemittel führenden Leitungen sind nicht gezeigt.

Das Gehäuse 11 weist vorzugsweise einen rechteckförmigen Grundriss auf, wobei sowohl beide Längswände 30, 32 als auch beide Stirnwände 34, 36 eben und von Wandöffnungen durchsetzt sind. Über eine in der Längswand 30 vorgesehene Wandöffnung 38 kann für den Verflüssiger 20 mittels des Gebläses 22 Frischluft oder mit aus einem zu klimatisierenden Abteil abgezogener Luft vermischte Mischluft in den Verflüssiger angesaugt und über eine in der Längswand 32 des Gehäuses 11 vorgesehene Wandöffnung 40 aus dem Gehäuse 11 erwärmt wieder ins Freie abgeführt werden.

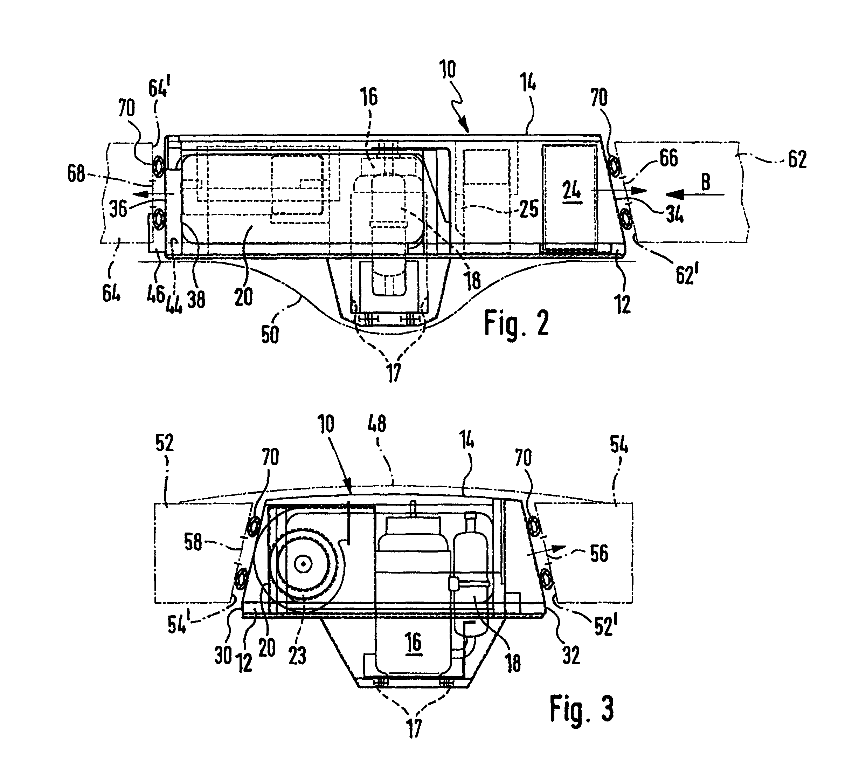

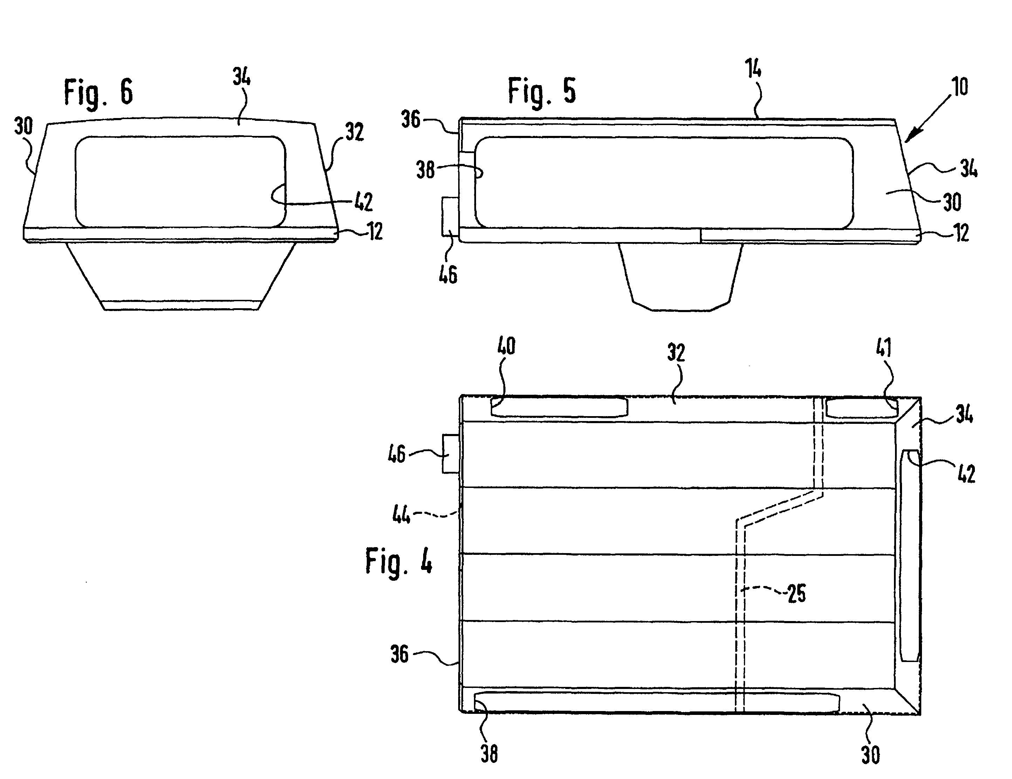

Ferner kann durch das Gebläse 23 über die Wandöffnung 38 oder ggf. über eine in der Längswand 30 zusätzlich vorgesehene Wandöffnung dem Verdampfer 24 Außen- oder Mischluft zugeführt werden, die über eine in der Gehäusestirnwand 34 vorgesehene Wandöffnung 42 zur Klimatisierung der betreffenden Raumzone zuführbar ist. Desweiteren ist in den Gehäusestirnwänden 32 und 36 vorzugsweise noch jeweils eine weitere Wandöffnung 41 bzw. 44 (siehe Figuren 2 und 4) vorgesehen, deren Zweck weiter unten erläutert wird.

Schliesslich ist für den elektrischen Anschluss des Kältemittelkreislaufes sowie für Steuerventile, ein Druckminderventil und ggf. weiterer elektrisch arbeitender Komponenten gehäuseaußenseitig wenigstens noch eine elektrische Anschlussvorrichtung vorgesehen, die im vorliegenden Falle durch einen an der Gehäusestirnwand 36 angeordneten Stecker 46 gebildet ist.

Wie aus den Figuren 1 bis 3 ersichtlich ist, sind die Gehäuseseitenwände 30, 32 sowie die Gehäusestirnwand 34 schräg nach innen geneigt angeordnet. Die Neigerichtung richtet sich hierbei nach der vorgesehenen Einbaulage des Klimatisierungsmoduls unter- oder überflur.

Im vorliegenden Falle ist das Gehäuse 11 für den Einbau zwischen das Dach 48 und eine Zwischendecke 50 (Figuren 1 und 2) eines Reisezugwagens konzipiert, wozu die erwähnten Gehäusewände 30, 32 und 34 nach oben, innen geneigt sind.

Zur Zuführung von Außen- und/oder Mischluft sowie zur Abführung der aus der Gehäusekammer 28 ausströmenden, erwärmten Fortluft dienen zwei im Dachbereich verlegte und sich in Waggonlängsrichtung im Abstand parallel zueinander erstreckende Luftführungskanäle 52, 54, die im Querschnitt vorzugsweise Kastenprofil haben. Ihre den Gehäuseseitenwänden 30, 32 benachbarten Wandteile 52' bzw. 54' sind eben und diesen parallel geneigt zugeordnet und jeweils von Verbindungsöffnungen 56 bzw. 58 durchsetzt, die bei montiertem Klimatisierungsmodul 10 jeweils mit einem seiner Gehäusewandöffnungen 38, 40, 41 fluchten (Figur 3).

Desweiteren sind mit 62 und 64 Luftführungskanäle bezeichnet, die vorzugsweise den Abstand zwischen beiden Luftführungskanälen 52, 54 überbrücken und jeweils in die zu klimatisierende Raumzone bzw. ein Wagenabteil ausmünden, wobei die entsprechenden Ausmündöffnungen im Deckenund/oder Fenster- und/oder Bodenbereich liegen können. Analog der oben erläuterten Zuordnung der den Gehäuseseitenwänden 30, 32 benachbarten Wandteile 52', 54' der Luftführungskanäle 52, 54 sind auch die Wandteile 62' bzw. 64' der Luftführungskanäle 62, 64 den benachbarten Gehäusestirnwänden 34, 36 parallel zugeordnet und von jeweils einer Verbindungsöffnung 66 bzw. 68 durchsetzt (Figuren 2 und 4).

Im Unterschied zu den Gehäuselängswänden 30, 32 ist jedoch lediglich die Gehäusestirnwand 34 schräg nach oben, innen geneigt vorgesehen.

Sämtliche Kanalverbindungsöffnungen 56, 58, 66, 68 sind randseitig jeweils von einer endlos umlaufenden, vorzugsweise ein Hohlprofil aufweisenden, elastomeren Dichtleiste 70 eingefasst.

Zur Montage des Klimatisierungsmoduls ist dasselbe zwischen die Luftführungskanäle 52, 54, 62, 64 einzusetzen, wobei die schräg geneigten Wände von Gehäuse 11 und Luftführungskanäle 52, 54, 62 ein Justierbett bilden, das in der endgültigen Modul-Einbaulage dasselbe derart orientiert, dass sämtliche Luftanschlüsse zwangsläufig zueinander fluchten und die sie aufweisenden Gehäuse- und Kanalwände sich abgedichtet aneinander abstützen. Anschlussverschraubungen erübrigen sich somit.

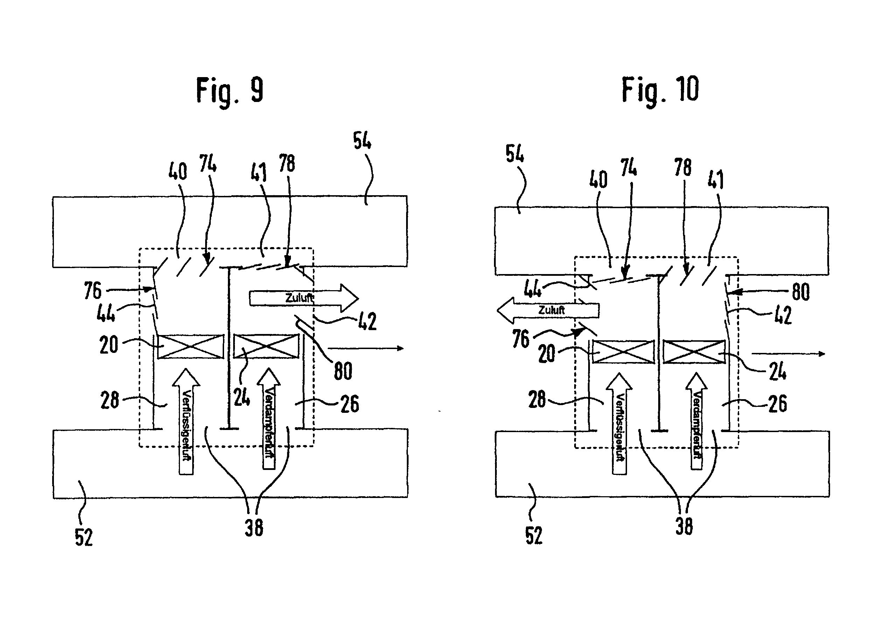

Anhand der Figuren 9 bis 11 werden die durch das erläuterte Klimatisierungsmodul 10 möglichen Klimatisierungsmöglichkeiten erläutert, wobei über ansteuerbare, geeignete Schließ- und Öffnungsvorrichtungen, die in diesen Figuren lediglich schematisiert durch Klappen angedeutet sind, der Luftfluss entsprechend steuerbar ist.

Zur Luftführung ist den Gehäusewandöffnungen 40 und 44 der Gehäusekammer 28 jeweils eine Öffnungs- und Schließvorrichtung, im folgenden kurz Klappenanordnung genannt, zugeordnet, die mit 74 und 76 bezeichnet sind, während den Gehäusewandöffnungen 41 und 42 der Gehäusekammer 26 jeweils eine Klappenanordnung 78 bzw. 80 zugeordnet ist.

Im Sommer- bzw. Kühlbetrieb befindet sich, gemäß Figur 9, die Klappenanordnung 74 der den Verflüssiger 20 enthaltenden Gehäusekammer 28 in Offenstellung und die Klappenanordnung 76 in Schließstellung, während die Klappenanordnung 78 der den Verdampfer 24 enthaltenden Gehäusekammer 26 sich in Schließstellung und die Klappenanordnung 80 in Offenstellung befindet.

Folglich kann gekühlte Außen- oder Mischluft vom Verdampfer 24 zu der angeschlossenen Raumzone und durch den Verflüssiger 20 erwärmte Prozessluft ins Freie abströmen.

Im Winter- bzw. Heizbetrieb befindet sich, gemäß Figur 10, die Klappenanordnung 74 in Schließ- und die Klappenanordnung 76 in Offenstellung, während die Klappenanordnung 78 sich in Offenstellung und die Klappenanordnung 80 in Schließstellung befindet.

Folglich kann die den Verdampfer 24 durchströmende, gekühlte Außen- oder Mischluft ins Freie und durch den Verflüssiger erwärmte Prozess- bzw. Außen- oder Mischluft in die dann an die Gehäusekammer 28 angeschlossene Raumzone abströmen.

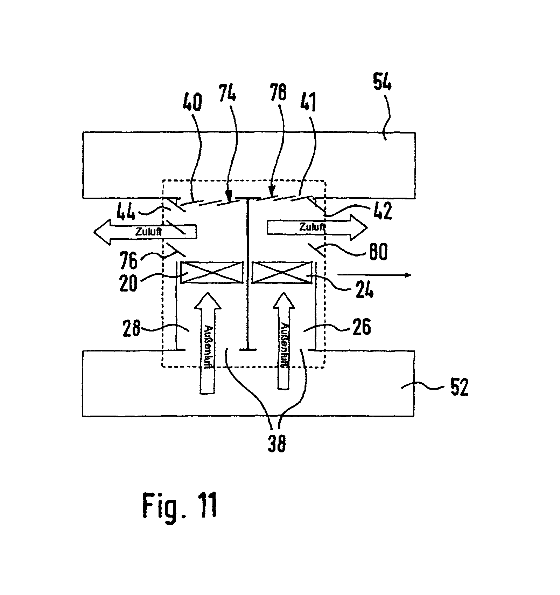

Im Lüftungsbetrieb gemäß Figur 11 ist der Verdichter 16 außer Betrieb gesetzt und die Klappenanordnungen 74 und 78 befinden sich in Schließstellung, während die Klappenanordnungen 76 und 80 in ihre Offenstellung gesteuert sind.

Folglich kann nicht temperierte Luft gleichzeitig aus beiden Gehäusekammern 26 und 28 ausschließlich in die Raumzone abströmen.

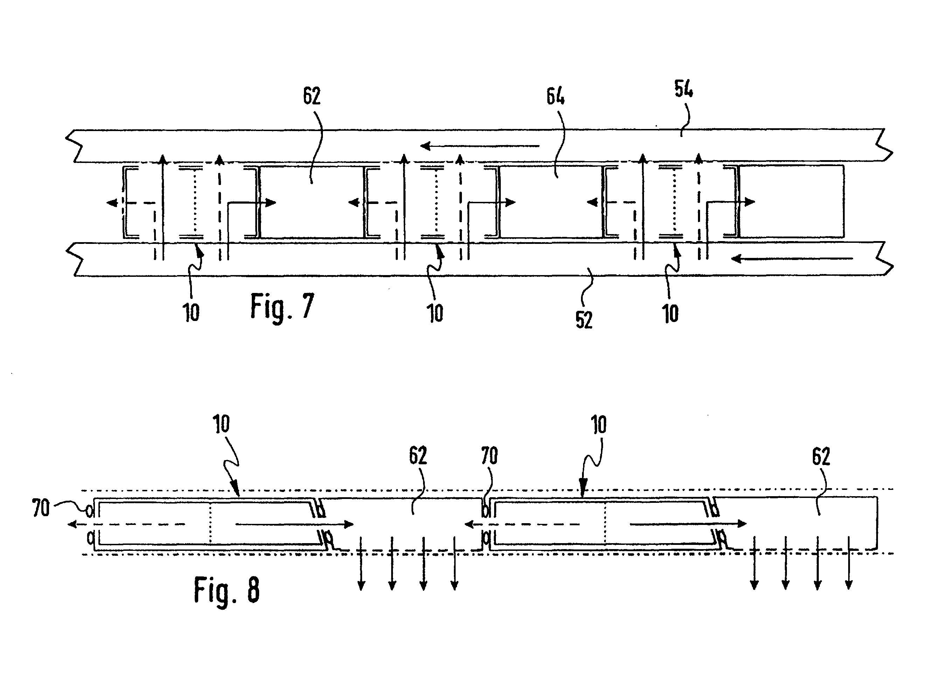

Die erläuterte Modulkonstruktion erlaubt eine Neuausrüstung bzw. Nachrüstung von Fahrzeugen, wie Reisezugwagen, mit geringem Wartungs- und Montageaufwand, wobei sie in Reisezugwagen oder anderen Personentransportfahrzeugen für einen dezentralen Einbau insbesondere im Dachbereich ermöglicht und dadurch hohe Redundanz gewährleistet, da bei Ausfall eines oder mehrerer Module die Klimatisierung weitgehend aufrechterhalten bleiben (vergl. Figuren 7 und 8).

Die Gebläse 22 und 23 sind vorzugsweise extern gestuft oder stufenlos regelbar; ebenso ist ein Verdichterregelkreis über HD/SD-Schalter intern ein- und extern ausschaltbar.

Es ist somit problemlos eine Sommer/Winterumschaltung möglich, bei der die Anlage im Kälte/Wärmepumpenbetrieb arbeitet.

## Patentansprüche

1. Einbaufertiges Klimatisierungsmodul (10), insbesondere zur Klimatisierung von Fahrgasträumen von Schienenfahrzeugen, mit einem hermetisch geschlossenen, elektrisch betreibbaren Kältemittelkreislauf, der von einem Gehäuse (11) aufgenommen ist, das außenseitig wenigstens eine elektrische Anschlussvorrichtung (46) aufweist, sowie an ebenen Gehäuseseitenwänden (30, 32, 34, 36) von Wandöffnungen (38, 40, 41, 42, 44) für die Luftführung durchsetzt ist, die mit jeweils einer Verbindungsöffnung (56, 58, 66, 68) von fahrzeugfest montierten Luftführungskanälen (52, 54, 62, 64) abgedichtet verbindbar sind, über die in das Gehäuse (11) einströmende Luft Komponenten des Kältemittelkreislaufs als Prozessluft zu- und als erwärmte bzw. zur Klimatisierung einer Raumzone gekühlte Luft abführbar ist, **dadurch gekennzeichnet, daß** die ebenen, von Wandöffnungen (38, 40, 41, 42, 44) durchsetzten Gehäuseseitenwände (30, 32, 34, 36) sowie die diesen benachbarten, jeweils von einer Verbindungsöffnung (56 bzw. 58 bzw. 66 bzw. 68) durchsetzten Kanalwandteile (52', 54'; 62', 64') der fahrzeugfesten Luftführungskanäle (52, 54, 62, 64) einander parallel und mindestens zum Teil derart schräg zugeordnet sind, dass beim Einbau des Klimatisierungsmoduls (10) sich dasselbe selbsttätig derart justiert, dass in der endgültigen Einbaulage einander zugeordnete, die Wandöffnungen (38, 40, 41, 42, 44) und Verbindungsöffnungen (56, 58, 66, 68) aufweisende Gehäuse- bzw. Kanalwandteile bei fluchtender Zuordnung ihrer Öffnungen abgedichtet sich aneinander abstützen.

2. Klimatisierungsmodul nach Anspruch 1, **dadurch gekennzeichnet, dass** der Rand der Gehäusewandöffnungen (38, 40, 41, 42, 44) und/oder der Kanalverbindungsöffnungen (56, 58, 66, 68) jeweils von einer umlaufenden Dichtleiste (70) eingefasst ist, die über die von diesen Öffnungen durchsetzten, ebenen Gehäuseseitenwände (30, 32, 34, 36) bzw. über die ebenen Kanalwandteile (52', 54'; 62', 64') der Luftführungskanäle (52, 54; 62, 64) übersteht.

3. Klimatisierungsmodul nach Anspruch 1 oder 2, **dadurch gekennzeichnet, dass** das Gehäuse (11) einen rechteckförmigen Grundriss aufweist und mindestens drei von Wandöffnungen (38, 40, 41, 42) durchsetzte, nach innen geneigte Gehäuseseitenwände (30, 32, 34) aufweist.

4. Klimatisierungsmodul nach Anspruch 3, **dadurch gekennzeichnet, dass** zwei voneinander getrennten Gehäusekammern (26, 28), von denen in der einen ein Verdichter (16) nebst Verflüssiger (20) und ggf. ein Gebläse (22) und in der anderen ein Verdampfer (24) und ggf. ein Gebläse (23) des Kältemittelkreislaufs angeordnet sind, über einen gemeinsamen Luftführungskanal (52) Prozessluft zuführbar ist und dass beide Gehäusekammern (26, 28) jeweils mit zwei voneinander getrennten Luftführungskanälen (54, 62) bzw. (54, 64) gleichzeitig wechselweise derart verbindbar sind, dass beim Kühlbetrieb die den Verdampfer (24) aufweisende Gehäusekammer (26) mit der zu klimatisierenden Raumzone und die den Verflüssiger (20) aufweisende Gehäusekammer (28) mit einem Luftabführkanal (54) oder die den Verflüssiger (20) aufweisende Gehäusekammer (28) mit der zu klimatisierenden Raumzone und die den Verdampfer (24) aufweisende Gehäusekammer (26) mit dem Luftabführkanal (54) verbindbar sind.

5. Klimatisierungsmodul nach Anspruch 4, **dadurch gekennzeichnet, dass** bei stillgelegtem Kältemittelkreislauf die Verbindung beider Gehäusekammern (26, 28) mit dem Luftabführkanal (54) unterbrechbar und diese gemeinsam mit der Raumzone verbindbar sind.

## Claims

1. Air-conditioning module 10) that is ready for installation, particularly for providing air-conditioning for the passenger areas of rail vehicles, with a hermetically sealed, electrically operable coolant circuit, that is taken up by a housing (11) that has at least one electrical connection device (46) and has openings (38, 40, 41, 42, 44), for the air circulation, that pass through flat housing lateral walls (30, 32, 34, 36), the said openings being each connectable, in sealed form, to a connection opening (56, 58, 66, 68) of air-circulation channels (52, 54, 62, 64) that are mounted fixed to the given vehicle and through which air components of the coolant circulation flowing into the housing (11) can be branched off as process air going to an internal area or via which such air components of the coolant can be branched off as heated air or cooled air for air-conditioning of the given internal area, **characterized in that** the level housing lateral walls (30, 32, 34, 36) that are passed through by openings (38, 40, 41, 42, 44) and the channel wall-sections (52', 54'; 62', 64') of the air-circulation channels (52, 54, 62, 64) that are fixed to the given vehicle that each have a connection opening in them (56 or 58 or 66 or 68), and that are adjacent to the said level lateral walls, are disposed parallel and at least partially inclined in relation to each other such that, when the air-conditioning module (10) is installed, the module is automatically aligned such that, in the final position of installation, the housing and channel wall-sections, having wall openings (38, 40, 41, 42, 44) and connection openings (56, 58, 66, 68), are assigned to each other with alignment of their openings that rest on each other in sealed form.

2. Air-conditioning module in accordance with claim 1, **characterized in that** the rim of the housing wall openings (38, 40, 41, 42, 44) and/or the channel connection-openings (56, 58, 66, 68) is in each case bordered by a surrounding, sealing strip (70) that projects over the level housing lateral walls (30, 32, 34, 36) and over the level channel wall sections (52', 54'; 62', 64') of the air-circulation channels (52, 54; 62, 64).

3. Air-conditioning module in accordance with claim 1 or claim 2, **characterized in that** the housing (11) is rectangular in outline and has at least three inwardly inclined housing side walls (30, 32, 34) with openings (38, 40, 41, 42) in them.

4. Air-conditioning module in accordance with claim 3, **characterized in that** two separate housing chambers (26, 28), in one of which is disposed a compressor (16) with besides a condenser (20) and, where applicable, a ventilator (22) and in the other a vaporizer (24) and where applicable a ventilator (23) of the coolant circuit are disposed, and process air can be supplied via a common air-circulation channel (52), and **in that** both housing chambers (26, 28) can be connected alternately at the same time to two separate air-circulation channels (54, 62) or (54, 64) such that, when cooling, the housing chamber (26) having the vaporizer (24) can be connected to the internal carriage area to be air-conditioned and the housing chamber (28) having the condenser (20) can be connected to an air-circulation channel (54) or to the internal carriage area to be air-conditioned, and the housing chamber (26) having the vaporizer (24) can be connected to the air extraction channel (54).

5. Air-conditioning module in accordance with claim 4, **characterized in that**, in the case of the coolant circulation being out of service, the connection of both housing chambers (26, 28) to the air extraction channel (54) can be interrupted, and these can be jointly connected to the internal carriage area.

## Revendications

1. Module de climatisation prêt au montage (10), notamment pour la climatisation d'espaces pour passagers dans des véhicules sur rails, comportant un circuit de réfrigérant fermé hermétiquement et pouvant fonctionner électriquement et qui est logé dans un boîtier (11), qui possède extérieurement au moins un dispositif de raccordement électrique (46), et est traversé, au niveau de parois latérales planes (30, 32, 34 et 36) du boîtier, par des ouvertures de paroi (38, 40, 41, 42, 44) pour le guidage de l'air, qui peuvent être reliées de façon étanche respectivement à une ouverture de liaison respective (56, 58, 66, 68) de canaux de guidage de l'air (52, 54, 62, 64) montés fixes par rapport au véhicule, et à l'aide desquels de l'air pénétrant dans le boîtier (11) peut être amené en tant qu'air de traitement à des composants du circuit du réfrigérant et peut en être évacué, en tant qu'air chaud ou en tant qu'air refroidi pour la climatisation d'une zone d'espace, **caractérisé en ce que** les parois latérales planes (30, 32, 34, 36) du boîtier, traversées par des ouvertures de paroi (38, 40, 41, 42, 44), ainsi que les éléments de paroi (52', 54', 62', 64'), qui sont voisins de ces parois latérales et sont traversés par une ouverture de liaison respective (56 ou 58 ou 66 ou 68), des canaux de guidage de l'air (52, 54, 62, 64) fixes par rapport au véhicule sont disposées en étant parallèles entre elles et en étant au moins en partie obliques de telle sorte que lors du montage du module de climatisation (10), ce module s'ajuste de façon automatique de telle sorte que, dans la position finale de montage, des éléments de paroi du boîtier et des canaux, qui sont associés entre eux et comportent les ouvertures de paroi (38, 40, 41, 42, 44) et les ouvertures de liaison (56, 58, 66, 68), prennent appui les uns contre les autres d'une manière étanche alors que leurs ouvertures sont associées en étant alignées.

2. Module de climatisation selon la revendication 1, **caractérisé en ce que** le bord des ouvertures de paroi (38, 40, 41, 42, 44) du boîtier et/ou des ouvertures de liaison (56, 58, 66, 68) des canaux est entouré respectivement par une baguette d'étanchéité périphérique (70), qui fait saillie au-delà des parois latérales planes (30, 42, 34, 36) du boîtier, traversées par ces ouvertures, ou, respectivement, au-delà des éléments de paroi plans (52', 54'; 62', 64') des canaux de guidage de l'air (52, 54; 62, 64).

3. Module de climatisation selon la revendication 1 ou 2, **caractérisé en ce que** le boîtier (11) possède un contour de forme rectangulaire en projection horizontale et possède au moins trois parois latérales (30, 32, 34), qui sont traversées par des ouvertures de paroi (38, 40, 44, 42) et sont inclinées vers l'intérieur.

4. Module de climatisation selon la revendication 3, **caractérisé en ce que** de l'air de traitement peut être amené, par un canal commun (52) de guidage de l'air, à deux chambres (26, 28), qui sont séparées l'une de l'autre et dans l'une desquelles sont disposés un compresseur (16) avec un condenseur (20) et éventuellement un ventilateur (22), tandis que dans l'autre chambre sont disposés un évaporateur (24) et éventuellement un ventilateur (23) du circuit du réfrigérant, et que les deux chambres (26, 28) du boîtier peuvent être reliées simultanément d'une manière alternée respectivement à deux canaux de guidage de l'air (54, 62) et (54, 64), séparés l'un de l'autre de telle sorte que lors du fonctionnement avec refroidissement la chambre (26) du boîtier qui comporte l'évaporateur (24), puisse être reliée à la zone d'espace à climatiser et la chambre (26) du boîtier, qui comporte le condenseur (20), peut être reliée à un canal d'évacuation d'air (54), ou la chambre (28), qui possède le condenseur (20), puisse être reliée à la zone d'espace à climatiser et la chambre (26), qui possède l'évaporateur (24), puisse être reliée au canal d'évacuation d'air (54).

5. Module de climatisation selon la revendication 4, **caractérisé en ce que** lorsque le circuit du réfrigérant est arrêté, la liaison des deux chambres (26, 28) du boîtier avec le canal d'évacuation d'air (54) peut être interrompue et ces chambres peuvent être reliées en commun à la zone d'espace.
